# EUROPÄISCHE PATENTSCHRIFT

(11) **EP 3 239 663 B1**
(45) Veröffentlichungstag und Bekanntmachung des Hinweises auf die Patenterteilung: **21.10.2020**
(21) Anmeldenummer: 17167784.2
(22) Anmeldetag: 24.04.2017
(51) Int. Cl.: G01D 5/244

(54) **VERFAHREN ZUR ÜBERPRÜFUNG ELEKTRISCHER BZW. ELEKTRONISCHER SYSTEME**
METHOD FOR CHECKING ELECTRICAL OR ELECTRONIC SYSTEMS
PROCÉDÉ DE CONTRÔLE DE SYSTÈMES ÉLECTRIQUES OU ÉLECTRONIQUES

(30) Priorität: 25.04.2016 DE 102016107620
(43) Veröffentlichungstag der Anmeldung: 01.11.2017
(73) Patentinhaber: TR Electronic GmbH, 78647 Trossingen (DE)
(72) Erfinder: KUNER, Christoph, 78647 Trossingen (DE); FRIESEN, Andreas, 78647 Trossingen (DE)
(74) Vertreter: Patentanwälte und Rechtsanwalt Weiß, Arat & Partner mbB

(56) Entgegenhaltungen:
- EP-A1- 0 009 339
- EP-A2- 0 206 139
- EP-A2- 2 639 556
- DE-A1-102010 045 438

## Beschreibung

Die vorliegende Erfindung betrifft ein Verfahren zur Überprüfung elektrischer bzw. elektronischer Systeme, bei denen Signale erzeugt werden, auf die Sicherheit dieser Signale, wobei zumindest zwei Hauptsignale erzeugt werden und von jedem Hauptsignal auch ein antivalentes Signal abgeleitet wird.

### Stand der Technik

In der heutigen industriellen Welt müssen eine Vielzahl von elektrischen bzw. elektronischen Systemen auf ihre Sicherheit hin überwacht werden. Dabei werden hohe Standards angelegt, insbesondere was die funktionale Sicherheit der Signale anbelangt.

Die vorliegende Erfindung bezieht sich insbesondere, aber keineswegs ausschließlich, auf die Überwachung von Drehgeber bzw. Inkrementalgeber, aber auch Näherungsschalter. Derartige Drehzahlwächter dienen der sicheren Überwachung von Stillstand, Drehzahl, Drehzahlbereich, Position und Laufrichtung von beispielsweise einer Welle. Die entsprechenden Messwerte werden in Signale umgewandelt und in speziellen Auswerteeinheiten ausgewertet. Es ist verständlich, dass sich Fehler der Signale sehr negativ auswirken können.

Diese Drehgeber setzen die Drehbewegungen einer Achse in elektrische Impulssignale um. Dabei rotiert eine Massverkörperung mit der mechanischen Welle mit. Eine Abtastelektronik wandelt die Teilung der Massverkörperung in analoge elektrische Signale. Diese analogen Signale besitzen in der ersten Näherung die Form einer Sinuswelle; eine Sinus-Periode entspricht dabei der Länge einer Teilung der Massverkörperung. Daraus folgt, dass die Ausgangsfrequenz der Sinuswelle proportional zur Geschwindigkeit der Drehgeberwelle ist.

Im Allgemeinen werden von der Massverkörperung zwei unabhängige Signale abgeleitet, wobei das erste Signal mit SIN und das zweite mit COS bezeichnet wird, weil es gegenüber dem ersten Signal um 90° phasenverschoben erzeugt wird. Üblicherweise werden gleichzeitig die negierten Signale von der Abtastelektronik erzeugt, um eine differenzielle Datenübertragung zu ermöglichen. Die negierten Signale werden entsprechend mit /SIN und /COS bezeichnet. SIN und COS entstehen unabhängig voneinander in der Abtastelektronik. Deshalb wird hier von zwei Signalkanälen gesprochen.

Typische Anwendungsfälle für diese Drehgeber sind die Geschwindigkeitsmessung aus der Ermittlung der Ausgangsfrequenz der beiden Signalkanäle, die Richtungsbestimmung aus der Phasenlage der beiden Signalkanäle und die Winkelmessung durch Interpolation der beiden Signalkanäle.

Varianten der eben beschriebenen Drehgeber sind die sogenannten Rechteckimpuls-Drehgeber. Anstelle von analogen Sinuswellen werden Rechteckimpulse entsprechend der Teilung der Massverkörperung ausgegeben. Eine Teilung der Massverkörperung entspricht einem Rechteckimpuls auf der Ausgabeschnittstelle. Der Phasenversatz zwischen den beiden Signalkanälen bleibt bestehen, die Signale besitzen allerdings binären Charakter; es existieren nur zwei Signalzustände, nämlich HI und LO. Zur Unterscheidung der Ausgabesignale zur analogen Variante wird deshalb im Folgenden von den Kanälen A und B gesprochen. Üblicherweise werden ebenfalls die negierten Signale ausgegeben, d. h. /A und /B. Eine wesentliche Bedingung für die differenziellen Signale ist die Taktflankensynchronität zwischen A und /A bzw. B und /B. Deshalb entstehen die negierten Rechteckimpuls-Signale gewöhnlich durch Invertierung der Ausgangssignale A beziehungsweise B.

Der Vorteil der Rechteckimpuls-Schnittstelle liegt in der geringeren Störanfälligkeit der Schnittstelle und der einfacheren Auswertung der Signale auf der Seite der nachgelagerten Elektronik. Grundsätzlich herrschen aber die gleichen Anwendungsfälle wie bei der analogen Schnittstelle vor.

Vor allem bei der Anwendung von Rechteckimpuls-Drehgebern in Sicherheitsfunktionen treten Probleme auf. Die Stillstandsüberwachung oder die Überwachung der Geschwindigkeit einer Achse sind typische Anwendungsfälle der funktionalen Sicherheit. Drehgeber liefern gewöhnlich die Eingangssignale für eine solche Sicherheitsfunktion. Nachgelagerte Auswerteeinheiten überwachen diese Eingangssignale und leiten ggfs. den sicheren Zustand ein.

Im Sinne der funktionalen Sicherheit bieten die beiden analogen Signalkanäle SIN und COS die Möglichkeit einer idealen Fehleraufdeckung. Zu jedem Zeitpunkt muss der trigonometrische Pythagoras SIN² + COS² = 1 erfüllt sei. Dies gilt unabhängig davon, ob die Welle des Drehgebers steht, eine Bewegung im Gange ist oder ein Richtungswechsel vollzogen wird. Eine nachgelagerte Auswerteeinheit hat immer die Möglichkeit, die Funktion des Drehgebers am anderen Ende der Signalleitung zu verifizieren. Unter der Annahme einer Einfehlersicherheit im Drehgeber kann die nachgelagerte Auswerteeinheit Fehler in der Abtastelektronik oder in der Signalübertragung aufdecken, indem die Beziehung der beiden Analogsignale ausgewertet wird.

Aber auch der Einsatz von Rechteckimpuls-Drehgebern ist für Sicherheitsfunktionen interessant, weil die einfachere elektronische Auswertung und die geringere Störanfälligkeit der Signale eine höhere Verfügbarkeit der Sicherheitsfunktion verspricht. Es liegt eine Reihe von Problemen bei dieser Technologie vor, die den Einsatz in einer Sicherheitsfunktion erschweren.

Bei einem Rechteckimpuls-Drehgeber ist die Auswertung des trigonometrischen Pythagoras aus nachvollziehbaren Gründen nicht möglich. Zudem ist jede Signalkombination zwischen A und B gültig, sodass eine Fehleraufdeckung in der nachgelagerten Auswerteelektronik schwierig ist. Die Plausibilisierung der Signalpegel auf der Seite der nachgelagerten Auswerteelektronik ist praktisch nicht möglich.

Im Stillstand gilt zunächst der gleiche Nachteil in Bezug auf die Signalpegel, wie eben beschrieben. Im Quasi-Stillstand kommt erschwerend hinzu, dass bei einer schwingenden Bewegung um die Position eines Flankenwechsels ständige Flankenwechsel stattfinden. Die Auswerteelektronik kann hier eine tatsächliche Bewegung nicht mehr von einem Schwanken um die Stelle des Flankenwechsels unterscheiden, vor allem wenn der andere Kanal fehlerhaft arbeitet.

Der Einschaltmoment ist ein kritischer Zeitpunkt, weil der nachgelagerten Auswerteelektronik die "Vorgeschichte" des Prozesses fehlt. Unter Berücksichtigung des Nachteils in Bezug auf die Signalpegel, wie oben beschrieben, kann die Geberelektronik einen Stillstand vorgaukeln, obwohl sich die Welle bewegt. Dies ist dann der Fall, wenn die Ausgangssignale auf einem Pegel, z. B. LO, einfrieren.

Bei der differenziellen Übertragung von Rechteckimpulsen kommt es darauf an, dass die Taktflankenwechsel der jeweils antivalenten Signale, z. B. A und /A, synchron und mit kurzer Zeitverzögerung erfolgen. Deshalb wird das antivalente Signal eines Kanals in der Regel durch Invertierung des jeweiligen Signals erzeugt. Damit entstehen die antivalenten Signale eines Kanals aus einem Ursprungssignal. Die Antivalenzbeziehung innerhalb eines Kanals kann somit nicht mehr zur Plausibilisierung herangezogen werden, weil sich ein Fehler auf der Eingangsseite der Inverterstufe auf beide Ausgangssignale auswirkt.

Eine Sicherheitsüberwachung eines Inkrementalgebers, wie sie aus dem Stand der Technik bekannt ist, wird in der Figurenbeschreibung näher beschrieben. Ein bekanntes System zur Sicherheitsüberwachung eines Inkrementalgebers ist auch in der Patentschrift EP2639556 A2 beschrieben.

### Aufgabe

Aufgabe der Erfindung ist es, ein Rechteckimpulsgebersystem zu realisieren, das für sicherheitsrelevante Steuerungsaufgaben verwendet werden kann, ohne dass Plausibilisierungen über Zweit- oder Fremdsysteme notwendig werden. Dabei ist vor allem wichtig, dass die Elektronik des Gebersystems weitgehend zweikanalig, einfehlersicher und rückwirkungsfrei aufgebaut wird. Nachgelagerte elektrische, elektronische bzw. programmierbare elektronische Steuerungssysteme erhalten dabei einfach Entscheidungskriterien für die Plausibilisierung der Ausgangssignale der Rechteckimpulsgeber. Hierdurch werden die Kosten erheblich reduziert.

### Lösung der Aufgabe

Die Lösung der Aufgabe wird durch ein Verfahren gemäß Anspruch 1 erreicht. Zur Lösung der Aufgabe führt, dass das jeweilige antivalente Signal des einen Hauptsignals mit dem Hauptsignal des anderen Signals verknüpft wird.

Der grundsätzliche Lösungsansatz für die Verwendung eines Rechteckimpuls-Drehgebers für Sicherheitsfunktionen liegt darin, dass das Gerät zweikanalig ausgeführt wird. Ausgehend von der Welle und der Massverkörperung, die einkanalige Elemente darstellen, wird die komplette Elektronik in zwei getrennte Signalkanäle A und B unterteilt. Die Trennung wirkt sich auch auf das Layout der Elektronik aus, indem die Signalpfade getrennt geführt werden. Zusätzlich zu den zwei Kanälen werden auch die jeweils negierten Signale /A und /B getrennt geführt. Diese Massnahme wird für die ganze Signalkette verfolgt.

Die optische Abtastung liefert vier analoge, sinusförmige Signale (sin, cos, /sin, /cos). Eine Signalkonditionierung verstärkt diese Signale. Ein Rechteckgenerator formt die Analogsignale in eine binäre Rechteckform um und ein Ausgangstreiber verstärkt die Signale zur Übertragung an die nachgelagerte Auswerteeinheit.

Die vorliegende Erfindung kann bei allen sicherheitsbezogenen elektrischen, elektronischen und programmierbaren elektronischen Steuerungssystemen Anwendung finden. Dies gilt vor allem für elektrische Meß-, Steuer -, Regel - und Laborgeräte. Im Wesentlichen ist die vorliegende Erfindung bezogen auf elektrische Leistungsantriebssysteme mit einstellbarer Drehzahl usw. Sie dient vor allem bei der Anwendung von sicherheitstechnisch betrachteten integrierten Inkrementalgebern mit Rechteckimpuls-Schnittstelle und deren Zertifizierung beim TÜV. Die Anwendungsfälle reichen vom Einsatz in sicheren Motor-Feedback-Systemen bis zur sicheren Drehzahlüberwachung.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht eines Ausschnitts aus einem optischen Abtastprinzips eines Inkrementalgebers nach dem Stand der Technik;
**Figur 2** eine blockschaltbildliche Darstellung eines Teils der Systemarchitektur des Verfahrens nach dem Stand der Technik
**Figur 3** eine diagrammartige Darstellung der Umformung von Analogsignalen in Rechteck-Impulse nach dem Stand der Technik;
**Figur 4** eine diagrammartige Darstellung von Problemen bei der Umformung von Analogsignalen nach dem Stand der Technik;
**Figur 5** eine blockschaltbildliche Darstellung eines Teils einer erfindungsgemässen Signalverarbeitung und eine Systemskizze einer erfindungsgemäßen Verknüpfung von Signalen;
**Figur 6** eine diagrammartige Darstellung der Arbeitsweise der Taktsynchronisation für ein Gut-Signal;
**Figur 6a** eine diagrammartige Darstellung der Arbeitsweise der Taktsynchronisation in einem Fehlerfall "INC B-" mit Stuck-At-LO Fehler;
**Figur 6b** eine diagrammartige Darstellung der Arbeitsweise der Taktsynchronisation in einem Fehlerfall "B" mit Stuck-At-LO- Fehler;
**Figur 7** eine blockschaltbildliche Darstellung eines Teils der Systemarchitektur mit der erfindungsgemäßen Lösung und der Signalüberwachung.

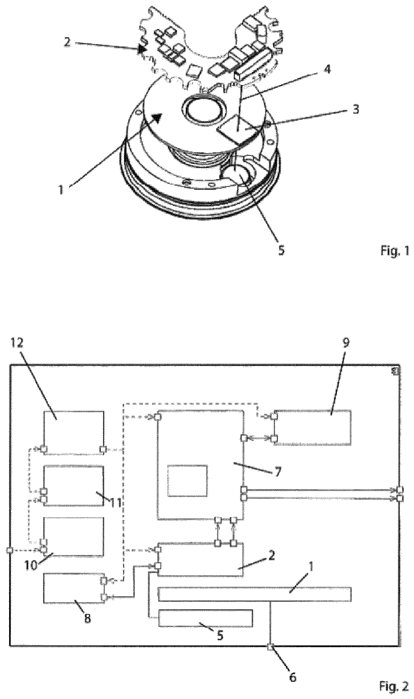

In Figur 1 ist ein Ausschnitt aus einem optischen Abtastprinzip eines Inkrementalgebers dargestellt. Der Inkrementalgeber erfasst die Winkelinformation des angeschlossenen Prozesses über die Drehung einer hier nicht näher gezeigten Welle. Die Welle kann dabei als Voll-, Hohl- bzw. Sacklochwelle ausgeführt werden.

An der Welle wird eine Impulsscheibe 1 befestigt. Auf einer Optoelektronik der Impulsscheibe 1 ist eine Blende 3 vorgesehen, die mit einer Abtastelektronik auf einer Abtasteinheit 2 zusammenwirkt. Die Blende 3 erlaubt einen Durchlass der Strahlung 4 eines beliebigen Senders, beispielsweise eines Infrarotsenders 5, zu der Abtasteinheit 2. Außerhalb der Blende 3 ist die Strahlung 4 unterbrochen.

In Figur 2 ist die Erzeugung der Signale in einem Blockschaltbild und in einer Ausführungsform dargestellt. Auf der Impulsscheibe 1 ist ein Strichcode aufgebracht. Die Impulsscheibe 1 ist mechanisch fest mit der Welle 6 verklebt. Die mit dem Lichtsender 5 zusammen arbeitende optische Abtasteinheit 2 bzw. ein mehrkanaliges Diodenarray erzeugt die phasenverschobenen Signalspuren und wertet in einem Durchlichtverfahren die Informationen auf der Impulsscheibe 1 aus und gibt diese in Form von einem Sinus- und Cosinus-Signal an einen Signalkonditionierung 7 weiter. D.h., die Abtasteinheit 2 liefert die analogen Signale SIN und COS. Eine Konfiguration für die Abtasteinheit 2 wird in einen Speicher 8 geschrieben

Die Signalkonditionierung 7 verstärkt die Signale aus der Abtasteinheit 2. Die Ausgänge der Signalkonditionierung werden direkt auf einen Stecker hinaus geführt. Die notwendige Konfiguration für die Signalkonditionierung 7 wird in einen weiteren Speicher 9 geschrieben.

Versorgt wird der gesamte Inkrementalgeber durch eine Eingangsschaltung bestehend aus Filter 10, Netzteil 11 und einer Spannungsüberwachung 12, die bei Verlassen einer vorgegebenen Toleranz die Folgeschaltung spannungsfrei schaltet.

Die Impulsscheibe 1 erfasst mit einer bestimmten Anzahl von Perioden pro Umdrehung die Winkelschritte der Welle. Die Abtasteinheit 2 mit integrierter Optoelektronik erzeugt elektrische Signale und gibt Signalperioden aus, die in der Signalkonditionierung aufbereitet werden. Über die Anzahl der Hell-Dunkel Segmente (Strichzahl/Umdrehung) auf der Impulsscheibe 1 wird die Meßsystem-Auflösung definiert. Beim Durchfahren einer Umdrehung wird eine Signalfolge SIN von zum Beispiel 1024 Perioden ausgegeben.

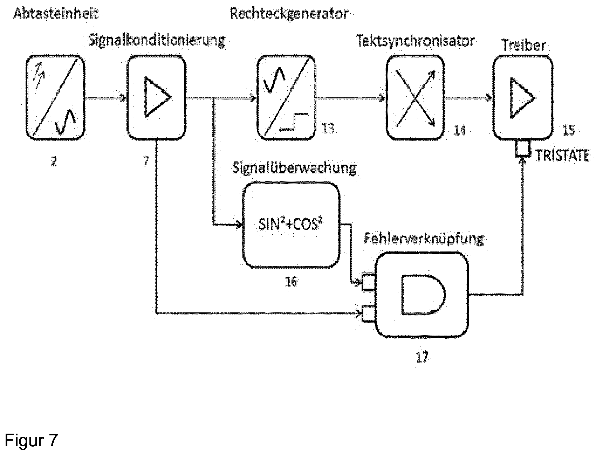

Zur Auswertung der Zählrichtung wird eine 2. Signalfolge COS mit 90° Phasenversatz für die Steuerung ausgegeben. Eine Auswerteelektronik zu einer Signalüberwachung, wie sie insbesondere in Figur 7 erkennbar ist, prüft ständig die Randbedingung "SIN² + COS² = 1" der beiden Analogkanäle. Sie dient dazu, die analogen Gebersignale zu verifizieren, bevor daraus Rechteckimpulse geformt werden.

Des Weiteren prüft die Signalüberwachung 16 die Spannungspegel (Lissajous-Figur) der Ausgangssignale. Die übergeordnete Steuerung ist Bestandteil des Sicherheitskonzepts. Sie erkennt durch die eigene Signalüberwachung Fehler im Ausgangssignal des Inkrementalgebers. Diese Fehler können in diesem Fall nur hochohmige Ausgangstreiber sein, z.B. durch eine Kabelbrucherkennung.

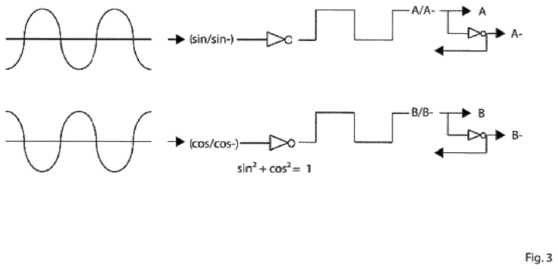

Gemäß Figur 3 werden jetzt nach dem Stand der Technik die Sinus-Signale und Cosinus-Signale in Rechteckimpulse umgewandelt, die dann miteinander verglichen werden. Die Umwandlung geschieht durch einen Trigger, beispielsweise einen Schmitt-Trigger. Es entsteht eine binäre Signalfolge A und eine binäre Signalfolge B. Von beiden Signalfolgen findet eine Abzweigung zu einem weiteren Trigger statt, der von der jeweiligen Signalfolge A bzw. B jeweils eine antivalente Signalfolge A- und B- ableitet und zur Verifizierung an die Signalüberwachung 16 zurückführt. Das bedeutet aber, dass das antivalente Signal A- und das antivalente Signal B- jeweils aus derselben Signalfolge stammt, wie das Hauptsignal A und B. Ein vorher vorhandener Fehler in der Signalfolge findet sich so auch in der antivalenten Signalfolge, sodass er bei einem Vergleich der Signalfolgen nicht entdeckt wird.

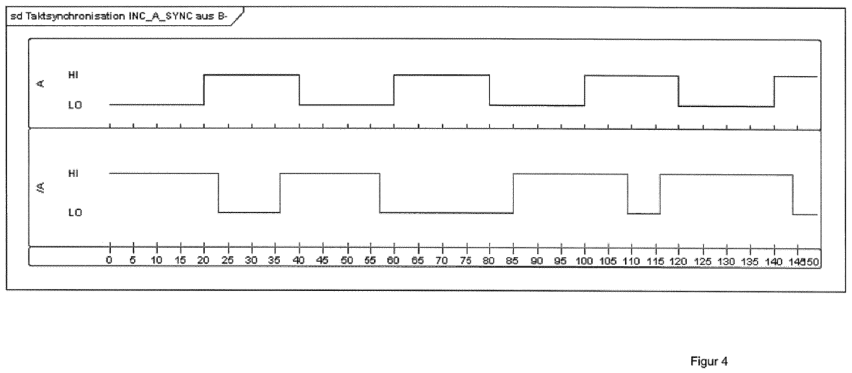

Bei der Umformung der Analogsignale eines Kanals in Rechtecksignale entsteht ein weiteres grundsätzliches, unumgängliches Problem: Die Flankenwechsel der eigentlichen antivalenten Signalfolgen erfolgen nicht synchron. Dies hängt mit Toleranzen in den Bauteilen, der Temperatur und der Signalqualität zusammen. So kann es prinzipiell immer dazu kommen, dass A einen Flankenwechsel vollzieht und A- im bisherigen Zustand verharrt. Dieses Problem tritt zunehmend bei langsamen Bewegungen zu Tage und führt letztendlich zu einem nicht-verfügbaren System, d.h. eine nachgelagerte Auswerteeinheit entdeckt ständig Verletzungen der Antivalenzbeziehung in den Rechtecksignalen eines Kanals. Figur 4 zeigt das Problem der Umformung zweier Analogsignale SIN und /SIN zu A und A-nach dem Stand der Technik. Die Taktflankenwechsel sind in Folge von Ungenauigkeiten nicht synchron. Vor allem bei kleinen Geschwindigkeiten wird die Antivalenzbeziehung verletzt.

Übliche Lösungen verwenden deshalb, wie oben beschreiben, eine Inverterstruktur an der Ausgangsstufe und plausibilisieren das Ausgangssignal durch Rückführung in die Elektronik, was aber den Nachteil hat, dass ein Fehler vor der Umwandlung in Rechtecksignale nicht erkannt wird, da dieser Fehler auch bei den antivalenten Signalen auftaucht.

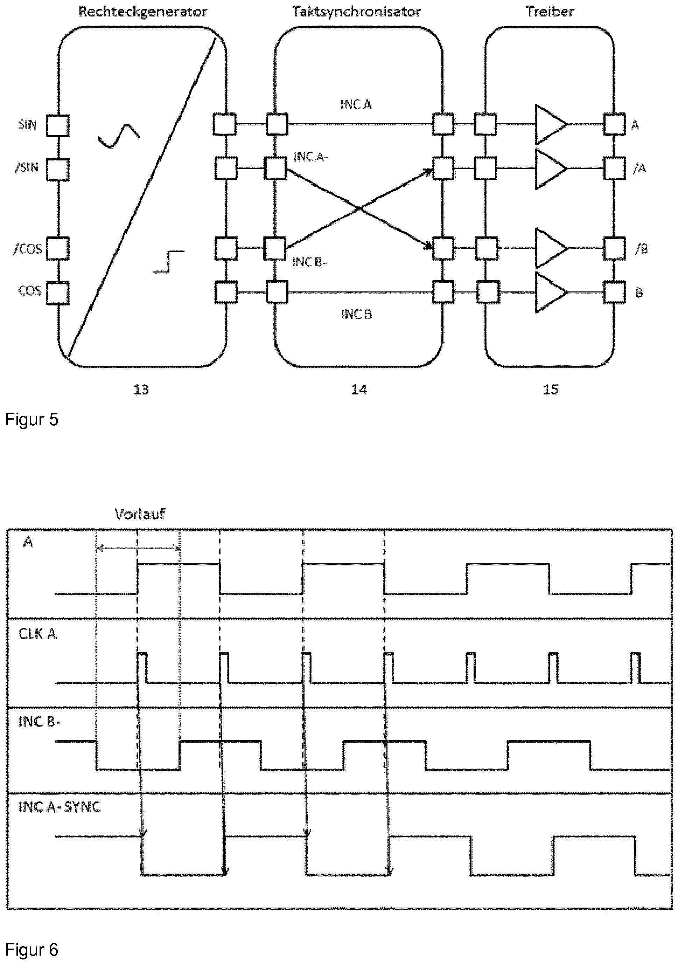

In der erfindungsgemässen Elektronik wird dagegen eine vierkanalige Struktur komplett durch die Systemarchitektur gezogen. Aus den analogen Signalfolgen SIN und COS werden bereits die entsprechenden antivalenten Signalfolgen /SIN und /COS abgeleitet. Diese vier Signalfolgen werden dann in Rechtecksignale A, B bzw. A-, B- umgewandelt und die jeweiligen antivalenten Signalfolgen A- und B- mit der jeweils anderen Hauptsignalfolgen B und A verknüpft. Es entsteht eine in Figur 5 dargestellte Überkreuzstruktur mit den negierten Signalen, während die Originalsignale unangetastet bleiben. Die Rückwirkungsfreiheit zwischen den Signalkanälen wird durch geeignete elektronische Massnahmen in der Taktsynchronisation gewährleistet.

Blockschaltbildlich gesehen bedeutet dies gemäß Figur 5, dass alle anlogen Signalfolgen einem Rechteckgenerator 13 zugeführt werden und anschließend eine Taktsynchronisation 14 mit der Überkreuzstruktur stattfindet. Die entsprechende antivalente Signalfolge zu der Signalfolge A wird als /A gekennzeichnet, ergibt sich aber aus der antivalenten Signalfolge B-. Ebenso gilt dies für die Signalfolgen B und /B. Die Signalfolgen gelangen dann in einen Treiber 15 und werden hinterher ausgegeben.

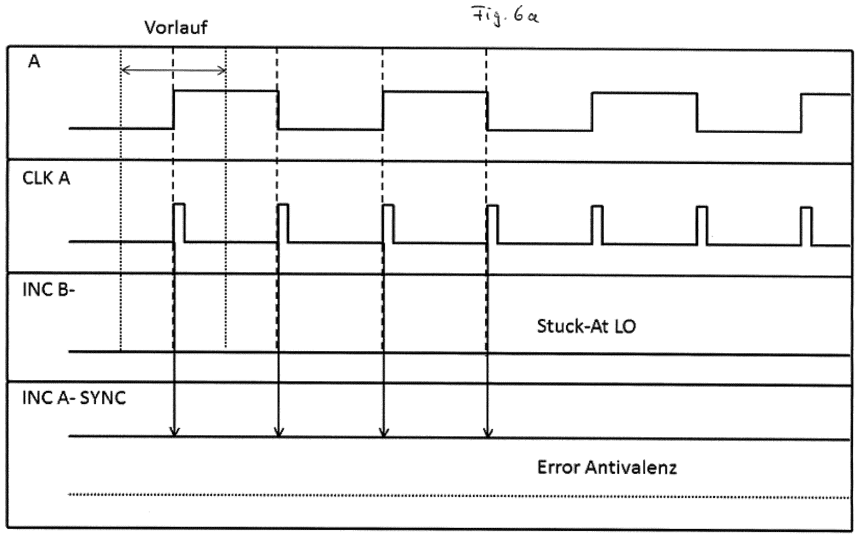

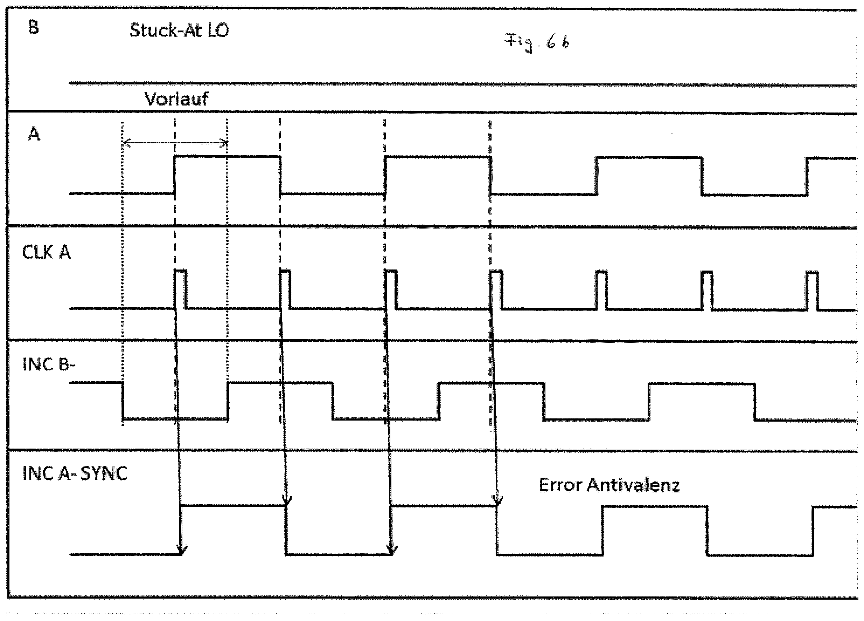

In Figur 6 ist nun der Unterschied der Signalüberwachung nach der vorliegenden Erfindung gegenüber dem Stand der Technik dargestellt. Die jeweils antivalenten Signale /A und /B werden in der Taktsynchronisation überkreuz aus den jeweils antivalenten Signalen B- und A- generiert, indem zum Zeitpunkt des Flankenwechsels der Signale A bzw. B die 90°-Beziehung zwischen Kanal A und B ausgewertet und die Drehrichtung verknüpft wird. Voraussetzung ist generell, dass die analogen Signale SIN, /SIN, COS, /COS vor Eingabe in die Rechteckimpuls- und Taktsynchronisationsschaltung über SIN² + COS² = 1 verifiziert werden.

Dabei zeigt Figur 6 den Gutfall. Von dem unberührten Rechtecksignal A werden seine Flankenwechsel betrachtet. Im Bild entsteht an den Flankenwechseln von A das entsprechende Taktsignal "CLK A"als Taktgeber für die Schaltung der Taktsynchronisation (CLK ist die Abkürzung für Clock- bzw. Taktsignal, das aus dem Flankenwechsel eines binären Rechtecksignals abgeleitet wird). An den Zeitpunkten der Flankenwechsel wird das ungeformte Signal "INC B-" betrachtet (INC ist die Abkürzung für intern umgeformtes Rechtecksignal vor der Ausgabe an der Systemschnittstelle). Unter Berücksichtigung der Drehrichtung entsteht aus INC B- das synchronisierte, zu A antivalente Ausgangssignal "INC A- SYNC" (INC SYNC ist die Abkürzung für intern umgeformtes und taktsynchronisierte Rechtecksignal vor der Ausgabe an der Systemschnittstelle), das als /A an der Systemschnittstelle ausgegeben wird (vergleiche Figur 5).

Figur 6a zeigt als Beispiel einen Fehlerfall "INC B-" mit einem Stuck-At-LO-Fehler, d.h., der Fehler ist darin zu sehen, dass das Signal stecken bleibt, d.h., statisch ist. Das unberührte Rechtecksignal A wird mit seinen Flankenwechseln betrachtet. Im Bild entsteht an den Flankenwechseln von A das entsprechende Taktsignal "CLK A" als Taktgeber für die Schaltung der Taktsynchronisation. An den Zeitpunkten der Flankenwechsel wird das umgeformtes Signal "INC B-" betrachtet, dass im Fehlerfall eingefroren, d.h., "Stuck-At-LO wäre. Unter Berücksichtigung der Drehrichtung entsteht aus dem fehlerhaften "INC B-" ein Fehlersignal mit Stuck-At-LO Charakteristik, für das nach gegebenem Zustandswechsel von A die Antivalenzbeziehung nicht mehr erfüllt ist. Die nachgeschaltete Auswerteeinheit erkennt einen Fehler in der antivalenten Beziehung zwischen A und A/ (vergleiche Figur 5).

Figur 6b beschreibt als weiteres Beispiel einen Fehlerfall, bei dem das Signal B festsitzt, d.h. mit Stuck.At-LO-Fehler, das unberührte Rechtecksignal B ist fehlerbehaftet und besitzt Stuck-At Charakteristik. Von dem unberührten Rechtecksignal A werden dessen Flankenwechsel betrachtet. Im Bild entsteht an den Flankenwechseln von A das entsprechende Taktsignal "CLK A" als Taktgeber für die Schaltung der Taktsynchronisation. An den Zeitpunkten der Flankenwechsel wird das umgeformte Signal "INC B-" betrachtet. Unter Berücksichtigung der Drehrichtung, die in diesem Fall logisch ständig wechselt, entsteht aus INC B- das synchronisierte, zu A äquivalente Ausgangssignal "INC A-SYNC", das als /A an der Systemschnittstelle ausgegeben wird (vergleiche Figur 5). Die nachgeschaltete Auswerteeinheit erkennt einen Fehler in der Antivalenzbeziehung zwischen A und A/ (vergleiche Figur 5) und damit den Fehler des Rechtecksignals B.

Wenn die Signalüberwachung im Gerät Fehler in den Ausgangssignalen erkennt, werden die Ausgangstreiber hochohmig geschaltet, so dass die Auswerteeinheit z.B. einen Kabelbruch erkennen kann. Die übrigen Fehler werden über die Antivalenzbeziehung oder aus der Phasenbeziehung erkannt.

In Figur 7 bilden die Signalüberwachung 16 und eine Fehlerverknüpfung 17 eine interne Diagnosefunktion. Wenn ein Fehler erkannt wird, wird hochohmig geschaltet, so dass die Auswerteeinheit Fehler in der Form von z.B. eines Kabelbruchs erkennen kann.

**Bezugszeichenliste**

| | | | | | |
|---|---|---|---|---|---|
| 1 | Impulsscheibe | 34 | | 67 | |
| 2 | Abtasteinheit | 35 | | 68 | |
| 3 | Blende | 36 | | 69 | |
| 4 | Strahlung | 37 | | 70 | |
| 5 | Sender | 38 | | 71 | |
| 6 | Welle | 39 | | 72 | |
| 7 | Signalkonditionierung | 40 | | 73 | |
| 8 | Speicher | 41 | | 74 | |
| 9 | Speicher | 42 | | 75 | |
| 10 | Filter | 43 | | 76 | |
| 11 | Netzteil | 44 | | 77 | |
| 12 | Spannungsüberwachung | 45 | | 78 | |
| 13 | Rechteckgenerator | 46 | | 79 | |
| 14 | Taktsynchronisator | 47 | | | |
| 15 | Treiber | 48 | | | |
| 16 | Signalüberwachung | 49 | | | |
| 17 | Fehlerverknüpfung | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Überprüfung elektrischer bzw. elektronischer Systeme, bei denen Signale bzw. Signalfolgen (SIN, COS) erzeugt werden, auf die funktionale Sicherheit dieser Signalfolgen, wobei zumindest zwei Rechtecksignalfolgen (A, B) erzeugt werden und von jeder Rechtecksignalfolge (A, B) auch eine antivalente Rechtecksignalfolge (A-, B-) erzeugt wird,
**dadurch gekennzeichnet,**
**dass** bereits bei der Erfassung der Signale aus einer analogen Signalfolge (SIN bzw. COS) eine jeweils antivalente Signalfolge (/SIN, /COS) abgeleitet und jede dieser analogen Signalfolgen in eine Rechtecksignalfolge (A, A- bzw. B, B-) umgewandelt und die jeweilige antivalente Rechtecksignalfolge (A-, B-) der einen Rechtecksignalfolge (A bzw. B) der jeweils anderen Rechtecksignalfolge (B bzw. A) überkreuz gegenübergestellt bzw. verknüpft wird, wobei eine Taktsynchronisation der Flankenwechsel zwischen den jeweils gegenübergestellten bzw. verknüpften Rechtecksignalfolgen und antivalenten Rechtecksignalfolgen erfolgt, und in einer nachgelagerten Auswerteeinheit die gegenübergestellten bzw. verknüpften Rechtecksignalfolgen überwacht werden, und die Auswerteeinheit einen Fehler in der antivalenten Beziehung durch Betrachtung der Flankenwechsel erkennt.

2. Verwendung des Verfahrens nach Anspruch 1 zur Überwachung von Wellenbewegungen einer Welle insbesondere durch Inkrementalgeber.

## Claims

1. Method for inspection of electrical or electronic systems, in which signals or signal sequences (SIN, COS) are generated, for the functional safety of these signal sequences, wherein at least two square-wave signal sequences (A, B) are generated and an antivalent square-wave signal sequence (A-, B-) is also generated from each square-wave signal sequence (A, B),
**characterized in that**,
a respective antivalent signal sequence (/SIN,/COS) is derived from an analogue signal sequence (SIN or COS) as soon as the signals are detected and each of these analogue signal sequences is converted into a square-wave signal sequence (A, A- or B, B-) and the respective antivalent square-wave signal sequence (A-, B-) of one square-wave signal sequence (A or B) is crossed over and opposed or linked to the respective other square-wave signal sequence (B or A), whereby a clock synchronization of the edge changes between the respectively opposed or linked square-wave signal sequences and antivalent square-wave signal sequences takes place, and the opposed or linked square-wave signal sequences are monitored in a downstreamed evaluation unit, and the evaluation unit detects an error in the antivalent relation by observing the edge changes.

2. Use of the method according to claim 1 for monitoring wave movements of a shaft, in particular by incremental encoders.

## Revendications

1. Procédé de contrôle des systèmes électriques ou électroniques dans lesquels sont générés des signaux ou des séquences de signaux (SIN, COS) en ce qui concerne la sécurité fonctionnelle de ces séquences de signaux, dans lequel sont générées au moins deux séquences de signaux rectangulaires (A, B) et est également générée, de chaque séquence de signaux rectangulaires (A, B), une séquence de signaux rectangulaires antivalents (A-, B-),
**caractérisé par le fait**
**que** déjà lors de la détection des signaux est dérivée, à partir d'une séquence de signaux analogiques (SIN ou COS), une séquence de signaux antivalents (/SIN, /COS) et que chacune de ces séquences de signaux analogiques est convertie en une séquence de signaux rectangulaires (A, A- ou B, B-) et que la séquence de signaux rectangulaires antivalents respective (A-, B-) de l'une séquence de signaux rectangulaires (A ou B) est opposée ou couplée de manière croisée à l'autre séquence de signaux rectangulaires (B ou A), où a lieu une synchronisation d'horloge des changements de flanc entre les séquences de signaux rectangulaires opposées ou couplées respectives et les séquences de signaux rectangulaires antivalents, et que les séquences de signaux rectangulaires opposées ou couplées sont surveillées dans une unité d'évaluation montée en aval, et que l'unité d'évaluation détecte une erreur dans le rapport antivalent en considérant les changements de flanc.

2. Utilisation du procédé selon la revendication 1 pour la surveillance des mouvements d'un arbre, notamment par des codeurs incrémentaux.
